Europäisches Patentamt

**European Patent Office**

**Office européen des brevets**

(19)

(11) Veröffentlichungsnummer: **0 084 601**
A1

## (12) EUROPÄISCHE PATENTANMELDUNG

(21) Anmeldenummer: **82109255.8**

(22) Anmeldetag: **07.10.82**

(51) Int. Cl.³: **F 16 B 7/08**

(30) Priorität: **16.12.81 DE 3149747**

(43) Veröffentlichungstag der Anmeldung: **03.08.83**
**Patentblatt 83/31**

(84) Benannte Vertragsstaaten: **AT BE CH FR GB IT LI NL**

(71) Anmelder: **artur fischer forschung, Weinhalde 14 - 18, D-7244 Waldachtal 3 (Tumlingen) (DE)**

(72) Erfinder: **Fischer, Artur H.C., Weinhalde 34, D-7244 Waldachtal 3/Tumlingen (DE)**

(54) **Befestigungselement zur Anbringung von Streben an Winkel- oder T-Profile.**

(57) Die Anmeldung betrifft ein Befestigungselement zur Anbringung von Streben an die Längskante des Schenkels eines Winkel- oder T-Profils. Um in einfacher Weise ohne Schweißen eine Befestigung der Streben zu ermöglichen, ist das Befestigungselement als U-förmige Klammer (1) mit zwei Schenkeln (2) ausgebildet, die einen die Strebe (3) aufnehmenden, nach einer Seitenkante hin offenen und parallel zum Klammersteg verlaufenden Schlitz (4) aufweisen. Durch eine den Klammersteg abdrückende Schraube (10), Keil od.dgl. ist die von der Klammer gehaltene Strebe mit dem Winkel- oder T-Profil verspannbar.

EP 0 084 601 A1

EP 1450

### Befestigungselement zur Anbringung von Streben an Winkel- oder T-Profile

Die Erfindung betrifft ein Befestigungselement zur Anbringung von Streben an die Längskante des Schenkels eines Winkel- oder T-Profils.

Eine derartige Befestigung ist bspw. dann erforderlich, wenn bei einem Gewächshaus, Halle oder dgl. eine aus transparenten Hohlkammerplatten bestehende Außenhaut auf eine aus Winkel- oder T-Profilen bestehende Unterkonstruktion aufgebracht werden soll. Die Hohlkammerplatten werden nämlich über hakenförmige Befestigungselemente an die querverlaufenden Streben der Unterkonstruktion eingehängt. Bei aus Stahl bestehenden Streben wäre ein Anbringen der Streben durch Schweißen ansich möglich. Allerdings bereitet dieses Verfahren durch Verzug der Unterkonstruktion einerseits und bei verzinkten Profilen andererseits Schwierigkeiten. Sehr häufig sind beim Gewächshausbau auch Aluminiumprofile im Einsatz, so daß das Schweißverfahren nicht geeignet ist. Ebenfalls nicht einsetzbar ist das Schweißverfahren, wenn die Streben bspw. aus einem Kunststoffprofil bestehen.

Der Erfindung liegt die Aufgabe zugrunde, ein Befestigungselement zu schaffen, mit dem in einfacher Weise eine Befestigung der Streben möglich ist.

Erfindungsgemäß wird dies dadurch erreicht, daß das Befestigungselement als U-förmige Klammer mit zwei Schenkeln ausgebildet ist, die einen die Strebe aufnehmenden, nach einer Seitenkante hin offenen und parallel zum Klammersteg verlaufenden Schlitz aufweisen, und daß durch eine den Klammersteg abdrückende Schraube, Keil oder dgl., die von der Klammer gehaltene Strebe mit dem Winkel- oder T-Profil verspannbar ist.

Durch das erfindungsgemäße Befestigungselement kann die Strebe an die Längskante des Schenkels des Winkel- oder T-Profils ohne Schweißen befestigt werden. Das Befestigungsverfahren ist somit auch dann anwendbar, wenn die Profile und / oder die Streben aus Aluminium, Kunststoff

.EP1450

oder einem anderen schwer bzw. nicht schweißbaren Werkstoff bestehen. Zur Befestigung der Strebe wird die Klammer über das Winkel- bzw. T-Profil gesteckt. In den die Längskante des Profils überragenden Schlitz der beiden Schenkel der Klammer wird die Strebe eingeschoben. Zum Festspannen der Strebe auf der Längskante des Winkel- bzw. T-Profils wird mit einer Schraube, Keil oder dgl. der Klammersteg vom Profil abgedrückt.

In einer weiteren Ausgestaltung der Erfindung kann der die Strebe aufnehmende Schlitz zur Stirnkante der Schenkel hin erweitert sein. Durch die Erweiterung ergibt sich eine Hinterschneidung, die auch bei einer weniger starken Verspannung ein Abrutschen der Strebe aus dem Schlitz der Klammer verhindert.

In einer weiteren Ergänzung der Erfindung kann die Schraube in einer Gewindebohrung des Klammersteges eingeschraubt sein. Beim Eindrehen der Schraube stützt sich deren Stirnseite am Profil ab und verspannt damit die Strebe mit dem Profil. Bei Verwendung einer Gewindeschneidschraube ist im Klammersteg lediglich die Ausstanzung des Kernlochs erforderlich.

In der Zeichnung sind Ausführungsbeispiele der Erfindung dargestellt. Es zeigen:

Figur 1   eine durch eine Schraube verspannbare Klammer

Figur 2   eine durch einen Keil verspannbare Klammer.

Das Befestigungselement ist als U-förmige Klammer 1 ausgebildet, deren Schenkel 2 mit je einem die Strebe 3 aufnehmenden, nach einer Seitenkante hin offenen Schlitz 4 versehen sind. Die Schlitzweite entspricht etwa dem Durchmesser der Strebe 3, so daß diese in die in einer Flucht liegenden und parallel zum Klammersteg 5 verlaufenden Schlitze 4 der beiden Schenkel 2 einschiebbar ist. Zur Stirnkante der Schenkel 2 hin sind die Schlitze 4 mit einer Erweiterung 6 versehen, in der die Strebe 3 einrastet. Die Strebe 3 liegt auf den Längskanten 7 der die Unterkonstruktion

EP  1450

bildenden T-Profile 8 auf. Die mit ihren beiden Schenkeln 2 über das
T-Profil 8 gestülpte und die Strebe 3 haltende Klammer 1 wird mit der
in dem Gewindeloch 9 des Klammersteges 5 eingedrehten Schraube 10 verspannt. Die Stirnseite der Schraube 10 stützt sich dabei an dem T-Profil 8 ab und drückt den Klammersteg 5 und das T-Profil 8 auseinander.
Durch die sich dabei ergebende Verspannung wird die Strebe 3 an dem
T-Profil 8 befestigt.

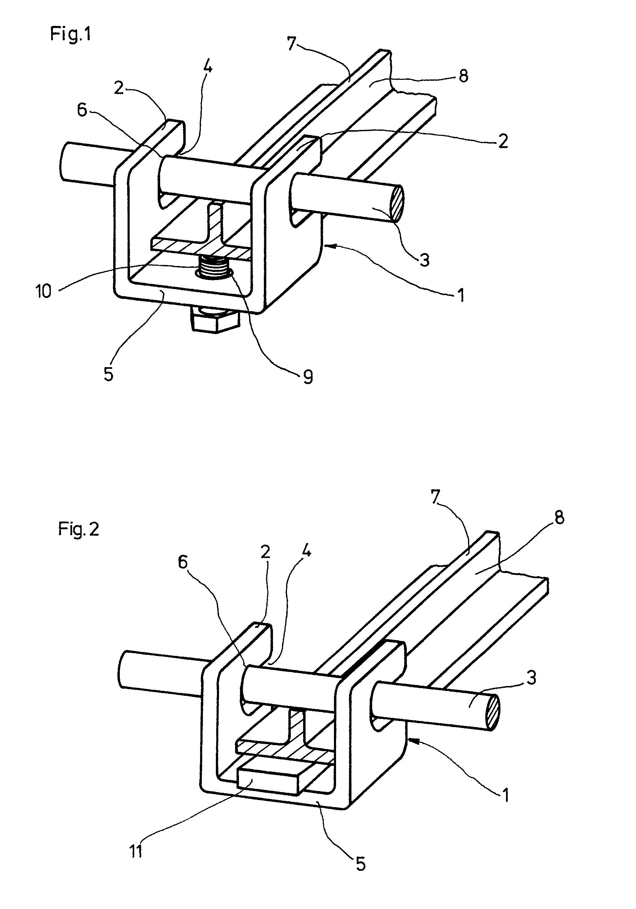

Bei dem Ausführungsbeispiel nach Figur 2 wird die Verspannung durch
einen Keil 11 erzeugt, der zwischen den Klammersteg 5 und das T-Profil
8 eingetrieben wird.

artur fischer forschung

7244 Tumlingen / Waldachtal 3                    14. Dezember 1981
                                                  Ju/Woe

- 1 -

EP 1450

Patentansprüche

1. Befestigungselement zur Anbringung von Streben an die Längskante des Schenkels eines Winkel- oder T-Profils, dadurch gekennzeichnet, daß das Befestigungselement als U-förmige Klammer mit zwei Schenkeln ausgebildet ist, die einen die Strebe aufnehmenden, nach einer Seitenkante hin offenen und parallel zum Klammersteg verlaufenden Schlitz aufweisen, und daß durch eine den Klammersteg abdrückende Schraube, Keil oder dgl., die von der Klammer gehaltene Strebe mit dem Winkel- oder T-Profil verspannbar ist.

2. Befestigungselement nach Anspruch 1, dadurch gekennzeichnet, daß der die Strebe aufnehmende Schlitz zur Stirnkante der Schenkel hin erweitert ist.

3. Befestigungselement nach Anspruch 1, dadurch gekennzeichnet, daß die Schraube in einer Gewindebohrung des Klammersteges eingeschraubt ist.

**1/1**

Fig.1

Fig. 2

0084601

# EUROPÄISCHER RECHERCHENBERICHT

Europäisches
Patentamt

Nummer der Anmeldung

EP 82 10 9255

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-C- 830 565 (INTERNATIONAL CONSTRUCTIONS CORP.) * Figur 3 * | 1,2 | F 16 B 7/08 |
| Y | DE-U-1 694 503 (NIEDERGESÄSS & CO.) * Figur 8 * | 1-3 | |
| Y | DE-U-1 793 998 (NIEDAX GESELLSCHAFT FÜR VERLEGUNGSMATERIAL) * Figur 2 * | 1-3 | |
| Y | DE-U-1 862 259 (POHL) * Figur 1 * | 1-3 | |
| Y | DE-U-7 419 527 (KNAPP) * Figur 3 * | 1,2 | RECHERCHIERTE SACHGEBIETE (Int. Cl. 3) F 16 B 7/08 |
| Y | DE-U-7 804 569 (EICHHOLZ) * Figur 1 * | 1,2 | |
| Y | US-A-2 163 635 (SHEA) * Figur 1 * | 1-3 | |
| Y | US-A-2 562 562 (MANASEK) * Figur 1 * | 1,3 | |
| | --- -/- | | |

Der vorliegende Recherchenbericht wurde für alle Patentansprüche erstellt.

| Recherchenort BERLIN | Abschlußdatum der Recherche 28-02-1983 | Prüfer ZAPP E |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches
Patentamt

**EUROPÄISCHER RECHERCHENBERICHT**

Nummer der Anmeldung

EP 82 10 9255

| **EINSCHLÄGIGE DOKUMENTE** | | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| Y | US-A-2 567 659 (VALENTA)<br>* Figur 1 *<br><br>--- | 1-3 | |
| Y | US-A-2 642 243 (KINDORF)<br>* Figur 3 *<br><br>----- | 1,3 | |
| | | | RECHERCHIERTE SACHGEBIETE (Int. Cl. ³) |
| | Der vorliegende Recherchenbericht wurde für alle Patentansprüche erstellt. | | |

| Recherchenort<br>BERLIN | Abschlußdatum der Recherche<br>28-02-1983 | Prüfer<br>ZAPP E |
|---|---|---|